# EUROPÄISCHE PATENTSCHRIFT

(11) **EP 3 616 575 B1**
(45) Veröffentlichungstag und Bekanntmachung des Hinweises auf die Patenterteilung: **30.06.2021**
(21) Anmeldenummer: 19188853.6
(22) Anmeldetag: 29.07.2019
(51) Int. Cl.: A47J 31/60, A47J 31/44

(54) **VERFAHREN ZUM BETREIBEN EINES GETRÄNKEAUTOMATEN**
METHOD FOR OPERATING A DRINKS MACHINE
PROCÉDÉ DE FONCTIONNEMENT D'UN DISTRIBUTEUR AUTOMATIQUE DE BOISSONS

(30) Priorität: 28.08.2018 DE 102018214563
(43) Veröffentlichungstag der Anmeldung: 04.03.2020
(73) Patentinhaber: BSH Hausgeräte GmbH, 81739 München (DE)
(72) Erfinder: Ostermaier, Albert, 83371 Stein a.d. Traun (DE)

(56) Entgegenhaltungen:
- EP-A2- 1 264 567
- WO-A1-2012/029047
- DE-A1-102012 109 982

## Beschreibung

Die vorliegende Erfindung betrifft ein Verfahren zum Betreiben eines Getränkeautomaten, insbesondere eines Kaffeevollautomaten, sowie ein System, aufweisend einen Getränkeautomaten, insbesondere einen Kaffeevollautomaten, und eine Software.

Es ist Stand der Technik, wie auch das Dokument DE 10 2012 109982 A1 zeigt, Haushaltsgeräte mit einer Kommunikationseinrichtung auszustatten, über welche eine (vorzugsweise drahtlose) Kommunikation mit einem mobilen Endgerät durchgeführt werden kann. Getränkeautomaten, wie beispielsweise Kaffeevollautomaten, erlangen ihre Betriebsbereitschaft vor Beginn eines Betriebsprogramms, wie beispielsweise eines Brühprogramms, meist über ein vorab ablaufendes Spülprogramm. Ist nun vorgesehen, mittels des Getränkeautomaten beispielsweise über eine App oder Programmierung unbeaufsichtigt Kaffe zu brühen, ist es unerwünscht, dieses Spülwasser mit in die Tasse aufzunehmen. Eine Platzierung der Tasse unterhalb des Kaffeeauslasses nach dem Spülprogramm ist dabei zwingend notwendig, was jedoch dem unbeaufsichtigten Kaffeebrühen entgegensteht.

Aufgabe der vorliegenden Erfindung ist es, ein Verfahren zum Betreiben eines Getränkeautomaten anzugeben, das sich insbesondere durch eine automatische und/oder benutzerunabhängige Platzierung eines Gefäßes unterhalb eines Getränkeauslasses auszeichnet.

Diese Aufgabe wird durch ein Verfahren zum Betreiben eines Getränkeautomaten mit den Merkmalen des Anspruchs 1 sowie durch ein System aufweisend einen Getränkeautomaten und eine Software mit den Merkmalen des Anspruchs 8 gelöst. Vorteilhafte Weiterbildungen der Erfindung sind Gegenstand der Unteransprüche.

Erfindungsgemäß weist ein Verfahren zum Betreiben eines Getränkeautomaten, insbesondere eines Kaffeevollautomaten, folgende Verfahrensschritte auf:
- Auswählen bzw. Einstellen von Betriebsparametern für ein zum Herstellen eines Heißgetränks vorgesehenes Betriebsprogramm mittels eines mobilen Endgeräts,
- Übermitteln der eingestellten bzw. ausgewählten Betriebsparameter an den Getränkeautomaten,
- Ausführen des Betriebsprogramms mittels des Getränkeautomaten basierend auf den eingestellten bzw. ausgewählten Betriebsparametern derart, dass
- vor dem Betriebsprogramm ein Spülprogramm des Getränkeautomaten durchgeführt wird,
- nach dem Spülprogramm und vor dem Betriebsprogramm ein zu befüllendes Gefäß automatisch unter einen Getränkeauslass, insbesondere Kaffeeauslass, des Getränkeautomaten bewegt wird, und
- anschließend das Betriebsprogramm ausgeführt wird.

Die Erfindung bezieht sich also auf die Möglichkeit, das zu befüllende Gefäß wie beispielsweise einer Tasse, automatisch unter den Getränkeauslass des Getränkeautomaten zu platzieren. Das Gefäß kann insbesondere außerhalb des Bereichs des Getränkeauslasses abgestellt werden. Bei einem unbeaufsichtigten Benutzen des Getränkeautomaten, beispielsweise über eine App, wird dann vorzugsweise nach dem Spülprogramm das Gefäß automatisch unterhalb des Getränkeauslasses platziert beziehungsweise gefahren. Vorteil bei der Erfindung ist es daher, zu befüllende Gefäße nicht zwingend unmittelbar vor dem Getränkebezug unterhalb des Getränkeauslasses platzieren zu müssen, um beispielsweise Spülwasser im bezogenen Getränk zu vermeiden.

Unter einem Getränkeautomaten ist insbesondere ein Getränke ausgebender Automat zu verstehen, der geeignet ist, auf Knopfdruck Heißgetränke bereitzustellen. Beispielsweise ist der Getränkeautomat eine Kaffeemaschine, ein Kaffeevollautomat oder ein Einbau-Kaffeevollautomat.

Unter einem Betriebsprogramm ist insbesondere jegliches Programm des Getränkeautomaten zu verstehen, das von dem Benutzer ausgewählt und insbesondere von dem Getränkeautomaten durchgeführt werden kann. Hierzu zählen insbesondere verschiedene Programme zum Brühen von Kaffee, Espresso und Herstellen von Cappuccino in jeglichen Variationen. Als mögliche und auszuwählende Betriebsparameter sind hierbei neben der Art des zu beziehenden Getränks unter anderem die Stärke des zu beziehenden Getränks (Koffeinstärke), die Menge des zu beziehenden Getränks (Tassengröße), der Brühdruck und/oder die Brühtemperatur zu nennen.

Unter einem mobilen Endgerät ist insbesondere ein tragbares Endgerät zu verstehen, wie beispielsweise ein Mobiltelefon und/oder Handy, welches zur drahtlosen Kommunikation gemäß einem vorbestimmten Kommunikationsstandard ausgebildet ist und auf welchem neue Anwendungen bzw. Applikationen (Computerprogramme) installiert und ausgeführt werden können. Das mobile Endgerät kann beispielsweise ein Mobiltelefon (Smartphone), ein Tablet-PC oder ein vergleichbares mobiles Endgerät sein, wie zum Beispiel ein MP3-Player mit einer entsprechenden Kommunikationseinrichtung und einer Anzeigeeinrichtung. Diese Ausführungsform macht sich dabei die Tatsache zunutze, dass heutzutage nahezu jeder über ein intelligentes Mobiltelefon mit einem Display verfügt, sodass sich der Einsatz von zusätzlichen Kommunikationsgeräten erübrigt.

Bevorzugt weist das mobile Endgerät eine berührungssensitive Anzeigeeinrichtung mit einer berührungsempfindlichen Oberfläche als Eingabeeinrichtung auf (Touchscreen). Die Bedieneingabe erfolgt dabei durch Berühren der berührungssensitiven Anzeigeeinrichtung. Somit ist die Bedienung besonders intuitiv und sicher, sodass auch Fehlbedienungen seitens des Benutzers verhindert werden können.

Ergänzend oder alternativ kann die Eingabeeinrichtung auch ein Spracherkennungssystem umfassen, mittels welchem Spracheingaben des Benutzers empfangen und ausgewertet werden können. Hierbei werden entsprechende Sprachbefehle durch das mobile Endgerät empfangen und abhängig von diesen Sprachbefehlen des Benutzers das entsprechende Betriebsprogramm aktiviert.

Zum Übermitteln der eingestellten bzw. ausgewählten Betriebsparameter an den Getränkeautomaten ist der Getränkeautomat vorzugsweise mit einer Kommunikationseinrichtung ausgestattet, über welche eine vorzugsweise drahtlose Kommunikation mit dem mobilen Endgerät durchgeführt werden kann. Die Datenkommunikation zwischen dem Getränkeautomaten einerseits und dem mobilen Endgerät andererseits kann dabei direkt unter Verwendung eines drahtlosen Heimnetzwerks durchgeführt werden, wie beispielsweise eines WLAN-Netzwerks. Andererseits kann die Datenkommunikation auch unter Vermittlung eines Internet-Servers vorgenommen werden, wobei hier der Getränkeautomat beispielsweise über einen WLAN-Router mit dem Internet-Server kommunizieren kann. Üblicherweise wird die Datenkommunikation über das Heimnetzwerk durchgeführt, solange sich das tragbare Endgerät in der Reichweite dieses Netzwerks befindet. Befindet sich das tragbare Endgerät außerhalb der Reichweite, erfolgt die Datenkommunikation dann über den Internet-Server. Wird als tragbares Endgerät beispielsweise ein Mobiltelefon verwendet, wird die Kommunikationsverbindung zum Internet-Server über ein Mobilfunknetzwerk aufgebaut.

Eine Datenkommunikation zwischen dem Getränkeautomaten einerseits und einem Internet-Server bzw. dem mobilen (tragbaren) Endgerät andererseits wird beispielsweise durch das System "Home Connect" ermöglicht, welches von dem Hause der Anmelderin angeboten wird.

Erfindungsgemäß wird vor dem Ausführen des gewählten Betriebsprogramms des Getränkeautomaten das Spülprogramm durchgeführt. Dabei ist bei dem Durchführen des Spülprogramms das zu befüllende Gefäß nicht unterhalb des Getränkeauslasses, sondern benachbart hierzu angeordnet, sodass während des Spülprogramms das Spülwasser nicht in dem Gefäß aufgefangen wird, sondern an dem Gefäß vorbeifließt, beispielweise in eine hierfür vorgesehene Auffang- und/oder Tropfschale. Nach Beenden des Spülprogramms wird das noch leere Gefäß automatisch unter den Getränkeauslass bewegt, beispielsweise gefahren, bevor das gewünschte beziehungsweise ausgewählte Betriebsprogramm ausgeführt wird.

Unter automatisch ist hierbei zu verstehen, dass das Gefäß benutzerunabhängig unterhalb des Getränkeauslasses bewegt wird. Ein Benutzer ist damit nicht gezwungen, neben dem Getränkeautomaten zu stehen, um das Gefäß manuell zum richtigen Zeitpunkt unterhalb des Getränkeauslasses zu platzieren beziehungsweise positionieren. Diese Positionierung erfolgt selbstständig beziehungsweise automatisiert, insbesondere selbsttätig beziehungsweise maschinell und nicht händisch.

Bei einer bevorzugten Weiterbildung der Erfindung weist das Verfahren den weiteren folgenden Verfahrensschritt auf:
Installieren einer Software, insbesondere einer App, auf dem mobilen Endgerät, um das Einstellen bzw. Auswählen der Betriebsparameter zu ermöglichen.

Insbesondere ist ein Installieren einer Software, insbesondere einer App, auf dem mobilen Endgerät vorgesehen, um dem Benutzer das Auswählen der Betriebsparameter auf dem mobilen Endgerät zu ermöglichen. Damit ist mittels des mobilen Endgerätes das erfindungsgemäße Verfahren durchführbar.

Die Software, insbesondere die App, kann beispielsweise auf einem Datenträger zur Verfügung stehen. Dieser Datenträger kann z.B. dem Getränkeautomaten beigefügt sein. In diesem Fall kann die Software von dem Datenträger auf das mobile Endgerät geladen werden.

Alternativ oder zusätzlich kann die Software, insbesondere die App, zum Beispiel im Getränkeautomaten, beispielsweise in dessen Speicher, gespeichert sein. In diesem Fall kann die Software vom Getränkeautomaten auf das mobile Endgerät geladen werden.

Weiter alternativ oder zusätzlich kann die Software, insbesondere die App, auch auf einer Webseite oder in einem App-Store zur Verfügung stehen. In diesem Fall kann die Software über das World Wide Web beziehungsweise dem Internet auf das mobile Endgerät herunter geladen werden.

Bei einer bevorzugten Weiterbildung der Erfindung erfolgt das Übermitteln der eingestellten bzw. ausgewählten Betriebsparameter vom mobilen Endgerät zum Getränkeautomaten und/oder zu einer zentralen Komponente drahtlos. Die Übermittlung der Betriebsparameter von dem mobilen Endgerät an den Getränkeautomaten kann also direkt (mobiles Endgerät - Getränkeautomat) oder indirekt über die zentrale Komponente (mobiles Endgerät - zentrale Komponente - Getränkeautomat) erfolgen.

Eine für einen Informationsaustausch mit Hausgeräten wie beispielsweise Getränkeautomaten nützliche zentrale Komponente ist durch Home Connect realisiert, welches von den Firmen BSH und Siemens definiert wurde (BSH Home Connect Server). Home Connect bietet eine offene Plattform für die Vernetzung von Hausgeräten und erlaubt es, dass ein Anwender Daten zwischen seinem mobilen Endgerät, wie zum Beispiel ein Smartphone, und seinen Hausgeräten überträgt. Darüber hinaus ist auch die Kommunikation aus dem Heimnetzwerk nach draußen möglich. Beispielsweise können aus dem Heimnetzwerk Daten, welche die Hausgeräte betreffen oder von den Hausgeräten stammen, über das Internet an einen zentralen Server übermittelt werden, der von einem Hausgeräteproduzenten betrieben wird.

Bei einer bevorzugten Weiterbildung der Erfindung erfolgt das automatische Bewegen des zu befüllenden Gefäßes mittels einer verschiebbaren Abstellplatte. Das Verschieben der Abstellplatte erfolgt dabei vorzugsweise automatisch und insbesondere benutzerunabhängig. Die Abstellplatte ist vorzugsweise auf einer Tropfschale des Getränkeautomaten (beweglich) angeordnet. Bevorzugt ist die Abstellplatte von der Tropfschale abnehmbar. Besonders bevorzugt ist lediglich die Abstellplatte verschiebbar. Das bedeutet, dass die Tropfschale im Gebrauch beziehungsweise Betrieb des Getränkeautomaten lokal fixiert beziehungsweise unbewegbar ist. Die Abstellplatte ist insbesondere automatisch relativ zur Tropfschale und insbesondere auf der Tropfschale entsprechend der gewünschten Positionierung des Gefäßes bewegbar, verfahrbar beziehungsweise verschiebbar.

Bei einer bevorzugten Weiterbildung der Erfindung wird die verschiebbare Abstellplatte mittels eines automatischen Antriebs bewegt. Dabei ist vorzugsweise der Antrieb (fester) Bestandteil des Getränkeautomaten. Das bedeutet, dass der Antrieb fixiert und nicht lösbar mit dem Getränkeautomaten verbunden ist beziehungsweise in diesem fest integriert ist. Die Abstellplatte und/oder die Tropfschale dagegen können vom Getränkeautomaten, insbesondere zu Reinigungszwecken, abnehmbar beziehungsweise entnehmbar ausgebildet sein.

Bei einer bevorzugten Weiterbildung der Erfindung erfolgt der automatische Antrieb mittels einer Antriebsspindel, einem Antrieb mit Zahnrad und/oder einem Zahnriemen.

Der Antrieb mit Antriebsspindel und/oder Zahnriemen beinhaltet vorzugsweise zudem eine mitnehmende Komponente (Mitnehmer), die mittels der Antriebsspindel beziehungsweise des Zahnriemens insbesondere entlang der Antriebsspindel beziehungsweise des Zahnriemens verschiebbar ist. Bevorzugt ist an der mitnehmenden Komponente die Abstellplatte fixiert, sodass diese bei einer Bewegung der mitnehmenden Komponente mit verschiebbar ist.

Die Erfindung betrifft weiter ein System, aufweisend einen Getränkeautomaten, insbesondere einen Kaffeevollautomaten, und eine Software, insbesondere eine App, die dazu eingerichtet ist, dass das oben ausgeführte Verfahren durchführbar ist, wenn die Software, insbesondere App, auf einem mobilen Endgerät installiert ist. Jegliche oben beschriebene Merkmale und Vorteile, die das Verfahren oder Komponenten hiervon betreffen, finden ebenfalls Anwendung bei dem erfindungsgemäßen System und werden an dieser Stelle nicht explizit wiederholt.

Bei einer bevorzugten Weiterbildung der Erfindung sind die Abstellplatte von dem Getränkeautomaten abnehmbar, und/oder der automatische Antrieb fest beziehungsweise fixiert am Getränkeautomaten angeordnet. Dies erlaubt dem Benutzer, die Abstellplatte, beispielsweise für Reinigungszwecke, von dem Getränkeautomaten zu lösen beziehungsweise abzunehmen, während der Antrieb weiter in dem Getränkeautomaten verankert bleibt.

Bei einer bevorzugten Weiterbildung der Erfindung weist der Getränkeautomat einen Vorratsbereich für zu befüllende Gefäße auf, die, insbesondere nacheinander, automatisch von der Abstellplatte abholbar sind. Hierbei ist es dem Benutzer vorteilhafterweise möglich, in dem Vorratsbereich gezielt eine Mehrzahl an zu befüllenden Gefäßen zu positionieren beziehungsweise platzieren, sodass diese leeren Gefäße bei Bedarf und insbesondere bei einer Auswahl eines Betriebsprogramms mittels des mobilen Endgeräts von der Abstellplatte aus dem Vorratsbereich zu dem Getränkeauslass transportiert werden können. Eine Mehrzahl von gewünschten Getränken können so automatisch mittels des mobilen Endgeräts angefordert werden, ohne dabei händische Aktionen des Benutzers, wie insbesondere das Auffüllen oder Positionieren der zu befüllenden Gefäße, notwendig zu machen.

Weitere Vorteile, vorteilhafte Ausführungsformen und Weiterbildungen des Verfahrens und des Systems ergeben sich aus den im Folgenden in Verbindung mit den Figuren beschriebenen Ausführungsformen. Es zeigen:
- Figur 1A:: eine schematische Ansicht eines Ausführungsbeispiels eines Getränkeautomaten während des erfindungsgemäßen Verfahrens,
- Figur 1B:: eine weitere schematische Ansicht eines Ausführungsbeispiels eines Getränkeautomaten während des erfindungsgemäßen Verfahrens,
- Figur 2A:: eine weitere schematische Ansicht eines Ausführungsbeispiels eines Getränkeautomaten während des erfindungsgemäßen Verfahrens,
- Figur 2B:: eine weitere schematische Ansicht eines Ausführungsbeispiels eines Getränkeautomaten während des erfindungsgemäßen Verfahrens, und
- Figuren 3A-3C:: jeweils eine schematische Ansicht eines Ausführungsbeispiels einer Abstellplatte, die zum Durchführen des erfindungsgemäßen Verfahrens Anwendung finden kann.

In den Ausführungsbeispielen und den Figuren können gleiche oder gleich wirkende Bestandteile jeweils mit den gleichen Bezugszeichen versehen sein. Die dargestellten Bestandteile und deren Größenverhältnisse zueinander sind grundsätzlich nicht als maßstabsgerecht anzusehen. Vielmehr können einzelne Elemente wie beispielsweise Schichten, Teile, Elemente, Komponenten und Bereiche zur besseren Darstellbarkeit und/oder zum besseren Verständnis übertrieben dick oder groß dimensioniert dargestellt sein.

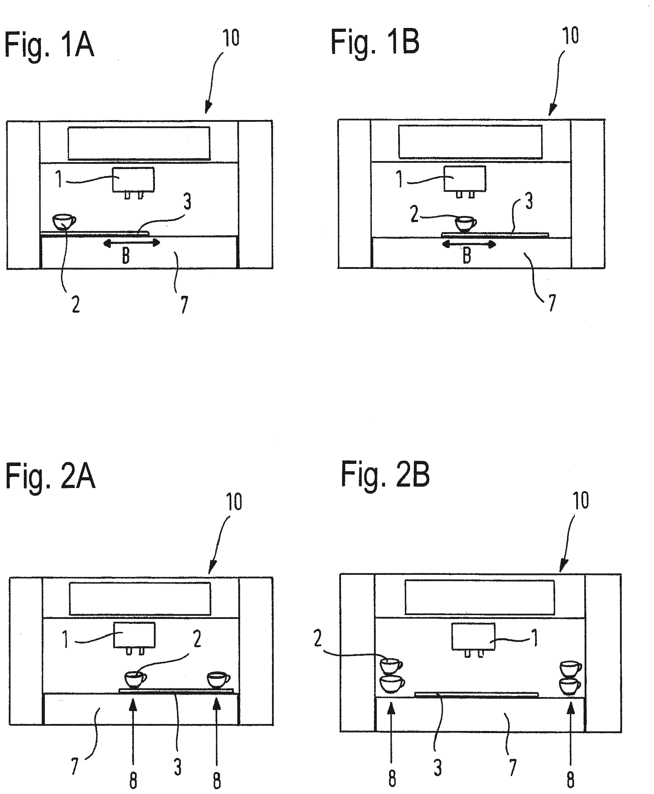

In den Figuren 1A, 1B ist ein Getränkeautomat, insbesondere ein Kaffeevollautomat 10, in verschiedenen Verfahrensstadien bei der Zubereitung eines Heißgetränks, insbesondere Kaffees, gezeigt. Der Kaffeevollautomat 10 weist jegliche, für die Kaffeezubereitung notwendigen Komponenten in einem Gehäuse auf, wie beispielsweise ein Mahlwerk, eine Brühkammer etc. (nicht dargestellt). Zudem weist der Kaffeevollautomat 10 einen Getränkeauslass 1, insbesondere einen Kaffeeauslass, auf. Der in dem Kaffeevollautomat 10 frisch zubereitete Kaffee wird aus diesem Getränkeauslass 1 an ein darunter stehendes, zu befüllendes Gefäß 2, insbesondere eine Tasse, abgegeben. Um tropfende oder überlaufende Flüssigkeit aufzufangen, ist das zu befüllende Gefäß 2 auf einer Tropfschale 7 abgestellt.

Um mit einem derartigen Kaffeevollautomaten 10 die Zubereitung eines gewünschtes Heißgetränk beispielsweise mittels einer App oder einer Programmierung automatisch starten und durchführen zu können, ist es wünschenswert, ein vorab durchzuführendes Spülprogramm, durch das derartige Kaffeevollautomaten meist ihre Bereitschaft erlangen, vor dem Platzieren des zu befüllenden Gefäßes 2 unterhalb des Getränkeauslasses 1 durchzuführen. Nur so kann gewährleistet werden, dass Spülwasser nicht in das zu befüllende Gefäß 2 gelangt. Hierzu ist eine automatische Platzierung des zu befüllenden Gefäßes 2 unterhalb des Getränkeauslasses 1 nach dem Spülprogramm erforderlich.

Erfindungsgemäß erfolgt dies über eine verschiebbare Abstellplatte 3, welche über einen automatischen Antrieb in horizontaler Richtung B bewegt wird. Das zu befüllende Gefäß 2 wird dazu außerhalb des Getränkeauslasses 1 auf der verschiebbaren Abstellplatte 3 abgestellt. Nach dem Spülprogramm wird das zu befüllenden Gefäß 2 automatisch mittels der verschiebbaren Abstellplatte 3 unter den Getränkeauslass 1 gefahren, sodass das auszugebende Getränk direkt in das Gefäß 2 abgegeben werden kann.

Das erfindungsgemäße Verfahren zum Betreiben des Kaffeevollautomaten 10 weist also folgende, nacheinander ausführende Verfahrensschritte auf:
- Auswählen bzw. Einstellen von Betriebsparametern für das zum Herstellen des Heißgetränks vorgesehenes Betriebsprogramm mittels eines mobilen Endgeräts, beispielsweise eines Handys,
- Übermitteln der eingestellten bzw. ausgewählten Betriebsparameter an den Kaffeevollautomaten 10,
- Ausführen des Betriebsprogramms mittels des Kaffeevollautomaten 10 basierend auf den eingestellten bzw. ausgewählten Betriebsparametern derart, dass
- vor dem Betriebsprogramm das Spülprogramm des Kaffeevollautomaten 10 durchgeführt wird,
- nach dem Spülprogramm und vor dem Betriebsprogramm das zu befüllendes Gefäß 2 automatisch unter den Getränkeauslass 1 des Kaffeevollautomaten 10 bewegt wird, und
- anschließend das Betriebsprogramm ausgeführt wird.

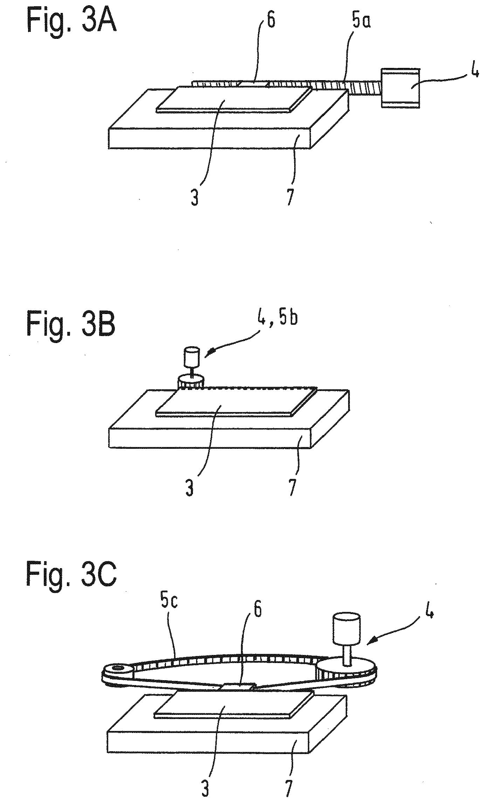

Nähere Erläuterungen zur verschiebbaren Abstellplatte 2 mit automatischem Antrieb sind in Zusammenhang mit den Figuren 3A bis 3C angegeben.

In den Figuren 2A, 2B ist jeweils ein Kaffeevollautomat 10 entsprechend dem Kaffeevollautomaten des Ausführungsbeispiels der Figuren 1A, 1B gezeigt, wobei im Unterschied jeweils ein oder mehrere Vorratsbereiche 8 für einige zu befüllende Gefäße 2, insbesondere Tassen, ausgebildet sind. Damit können bei Bedarf nacheinander automatisch mehrere Gefäße 2 mit dem jeweiligen Wunschgetränk befüllt werden, ohne dass hierbei Tassen händisch unter den Getränkeauslass 1 gestellt werden müssen.

Das Ausführungsbeispiel der Figur 2A zeigt eine Variante, bei der zwei Gefäße 2 befüllt werden können. Hierzu sind die beiden Tassen jeweils an einem anderen Ende der verschiebbaren Abstellplatte 3 abgestellt. Bei dem Spülprogramm wird die Abstellplatte 3 mittig platziert, sodass unterhalb des Getränkeauslasses 1 keine Tasse zu stehen kommt. Bei Auswahl des ersten Getränks wird die Abstellplatte 3 horizontal bis zum Anschlag verschoben, sodass eine der am Rand der Abstellplatte 3 platzierte Tasse unterhalb des Getränkeauslasses 1 zu stehen kommt und befüllt werden kann. Nach diesem ersten Befüllen fährt die Abstellplatte 3 in die andere Richtung bis zu einem gegenüberliegenden angeordneten Anschlag, sodass die andere am gegenüberliegenden Rand der Abstellplatte 3 platzierte Tasse unterhalb des Getränkeauslasses 1 zu stehen kommt und befüllt werden kann.

Figur 2B zeigt seitlich zur verschiebbaren Abstellplatte 3 angeordnete Vorratsbereiche 8, in denen die zu befüllenden Gefäße 2 gestapelt angeordnet sind und nacheinander automatisch von der Abstellplatte 3 abholbar sind.

In den Figuren 3A, 3B, 3C sind alternative Ausführungsbeispiele des automatischen Antriebs 4 der verschiebbaren Abstellplatte 3 gezeigt. Hierbei ist jeweils der Antrieb 4 (fester) Bestandteil des Kaffeevollautomaten 10, insbesondere des Grundgeräts, während die Tropschale 7 und die verschiebbare Abstellplatte 3 von dem Grundgerät abnehmbar sind.

Figur 3A zeigt eine Abstellplatte 3, die mittels eines automatischen Antriebs 4 und einer daran angeordneten Antriebsspindel 5a horizontal verschiebbar ist. An der Antriebsspindel 5a und an der Abstellplatte 3 ist dabei ein Mitnehmer 6 angeordnet, der die Bewegung der Abstellplatte 3 ermöglicht.

Figur 3B zeigt eine Abstellplatte 3, die mittels eines Antriebs mit Zahnrad 5b horizontal verschiebbbar ist. Das Zahnrad ist dabei an der Abstellplatte angeordnet. Vorzugsweise ist an der Abstellplatte 3 eine Zahnstange, bevorzugt mit Gegengewinde, angeordnet, über die die Abstellplatte 3 mittels des Zahnrads 5b in horizontaler Richtung bewegbar ist.

Figur 3C zeigt eine Abstellplatte 3, die mittels eines automatischen Antriebs 4 und einem daran angeordneten Zahnriemen 5c horizontal verschiebbar ist. An dem Zahnriemen 5c und an der Abstellplatte 3 ist dabei ein Mitnehmer 6 eingehängt beziehungsweise angeordnet, der die Bewegung der Abstellplatte 3 ermöglicht.

### Bezugszeichenliste

- 10: Kaffeevollautomat
- 1: Getränkeauslass
- 2: befüllendes Gefäß
- 3: verschiebbare Abstellplatte
- 4: Antrieb
- 5a: Antriebsspindel
- 5b: Antrieb mit Zahnrad
- 5c: Zahnriemen
- 6: Mitnehmer
- 7: Tropfschale
- 8: Vorratsbereich

## Patentansprüche

1. Verfahren zum Betreiben eines Getränkeautomaten, insbesondere eines Kaffeevollautomaten (10), aufweisend folgende Verfahrensschritte:
- Auswählen bzw. Einstellen von Betriebsparametern für ein zum Herstellen eines Heißgetränks vorgesehenes Betriebsprogramm mittels eines mobilen Endgeräts,
- Übermitteln der eingestellten bzw. ausgewählten Betriebsparameter an den Getränkeautomaten,
- Ausführen des Betriebsprogramms mittels des Getränkeautomaten basierend auf den eingestellten bzw. ausgewählten Betriebsparametern derart, dass
- vor dem Betriebsprogramm ein Spülprogramm des Getränkeautomaten durchgeführt wird,
- nach dem Spülprogramm und vor dem Betriebsprogramm ein zu befüllendes Gefäß (2) automatisch unter einen Getränkeauslass (1), insbesondere Kaffeeauslass, des Getränkeautomaten bewegt wird, und
- anschließend das Betriebsprogramm ausgeführt wird.

2. Verfahren nach Anspruch 1, weiter aufweisend:
Installieren einer Software, insbesondere einer App, auf dem mobilen Endgerät, um das Einstellen bzw. Auswählen der Betriebsparameter zu ermöglichen.

3. Verfahren nach Anspruch 2, weiter aufweisend:
Laden der Software von einem Datenträger oder von dem Getränkeautomat oder Herunterladen der Software vom World Wide Web.

4. Verfahren nach einem der vorhergehenden Ansprüche, wobei
das Übermitteln der eingestellten bzw. ausgewählten Betriebsparameter an den Getränkeautomaten drahtloses vom mobilen Endgerät zum Getränkeautomaten und/oder zu einer zentralen Komponente erfolgt.

5. Verfahren nach einem der vorhergehenden Ansprüche, wobei
das automatische Bewegen des zu befüllenden Gefäßes (2) mittels einer verschiebbaren Abstellplatte (3) erfolgt.

6. Verfahren nach Anspruch 5, wobei
die verschiebbare Abstellplatte (3) mittels eines automatischen Antriebs (4) bewegt wird.

7. Verfahren nach Anspruch 6, wobei
der automatische Antrieb (4) mittels einer Antriebsspindel (5a), einem Antrieb mit Zahnrad (5b) und/oder einem Zahnriemen (5c) erfolgt.

8. System, aufweisend einen Getränkeautomaten, insbesondere einen Kaffeevollautomaten (10), und eine Software, insbesondere eine App, die dazu eingerichtet ist, dass das Verfahren nach einem der vorhergehenden Ansprüche durchführbar ist, wenn die Software, insbesondere App, auf einem mobilen Endgerät installiert ist.

9. System nach Anspruch 8 unter Rückbezug auf Anspruch 5, 6 oder 7, wobei
die Abstellplatte (3) von dem Getränkeautomaten abnehmbar ist, und/oder der automatische Antrieb (4) fest beziehungsweise fixiert am Getränkeautomaten angeordnet ist.

10. System nach Anspruch 8 oder 9 unter Rückbezug auf Anspruch 5, 6 oder 7, wobei
der Getränkeautomat einen Vorratsbereich (8) für zu befüllende Gefäße (2) aufweist, die, insbesondere nacheinander, automatisch von der Abstellplatte (3) abholbar sind.

## Claims

1. Method for operating a beverage vending machine, in particular a coffee machine (10), having the following method steps:
- choosing or setting operating parameters for an operating program provided to produce a hot beverage by means of a mobile terminal,
- transferring the set or chosen operating parameters to the beverage vending machine,
- executing the operating program by means of the beverage vending machine on the basis of the set or chosen operating parameters so that
- a rinse cycle of the beverage vending machine is carried out before the operating program,
- after the rinse cycle and before the operating program a vessel (2) to be filled is moved automatically below a beverage outlet (1), in particular coffee outlet, of the beverage vending machine, and
- the operating program is then carried out.

2. Method according to claim 1, further having:
installing software, in particular an app, on the mobile terminal, in order to allow the operating parameters to be set or chosen.

3. Method according to claim 2, further having:
loading the software from a data carrier or from the beverage vending machine or downloading the software from the World Wide Web.

4. Method according to one of the preceding claims, wherein
the transfer of the set or chosen operating parameters to the beverage vending machine takes place wirelessly from the mobile terminal to the beverage vending machine and/or to a central component.

5. Method according to one of the preceding claims, wherein
the automatic movement of the vessel (2) to be filled takes place by means of a moveable worktop (3).

6. Method according to claim 5, wherein
the movable worktop (3) is moved by means of an automatic drive (4).

7. Method according to claim 6, wherein
the automatic drive (4) takes place by means of a drive spindle (5a), a drive with a gear wheel (5b) and/or a drive belt (5c).

8. System, having a beverage vending machine, in particular a coffee machine (10), and a software, in particular an app, which is designed so that the method according to one of the preceding claims can be carried out when the software, in particular app, is installed on a mobile terminal.

9. System according to claim 8 relating back to claim 5, 6 or 7, wherein the worktop (3) can be removed from the beverage vending machine and/or the automatic drive (4) is arranged fixedly on the beverage vending machine.

10. System according to claim 8 or 9 relating back to claim 5, 6, or 7, wherein the beverage vending machine has a storage area (8) for vessels (2) to be filled, which can be automatically picked up by the worktop (3), in particular one after the other.

## Revendications

1. Procédé de fonctionnement d'un distributeur de boissons, notamment d'un distributeur de café automatique (10), présentant les étapes de procédé suivantes :
- sélection resp. réglage, au moyen d'un terminal mobile, de paramètres de fonctionnement pour un programme opérationnel pour réaliser une boisson chaude,
- transmission au distributeur de boissons des paramètres de fonctionnement réglés resp. sélectionnés,
- exécution du programme opérationnel au moyen du distributeur de boissons sur la base des paramètres de fonctionnement réglés resp. sélectionnés, de manière à ce qu'
- un programme de nettoyage du distributeur de boissons soit réalisé avant le programme opérationnel,
- qu'après le programme de nettoyage et avant le programme opérationnel, un récipient (2) à remplir soit déplacé automatiquement en dessous d'une sortie de boisson (1), notamment d'une sortie de café, du distributeur de boissons, et
- que le programme opérationnel soit ensuite exécuté.

2. Procédé selon la revendication 1, présentant en outre :
installation d'un logiciel, notamment d'une application, sur le terminal mobile afin de permettre le réglage resp. la sélection des paramètres de fonctionnement.

3. Procédé selon la revendication 2, présentant en outre :
téléchargement du logiciel depuis un support de données ou depuis le distributeur de boissons ou téléchargement du logiciel depuis le World Wide Web.

4. Procédé selon l'une quelconque des revendications précédentes, dans lequel la transmission au distributeur de boissons des paramètres de fonctionnement réglés resp. sélectionnés est réalisée sans fil du terminal mobile vers le distributeur de boissons et/ou vers un composant central.

5. Procédé selon l'une quelconque des revendications précédentes, dans lequel le déplacement automatique du récipient (2) à remplir est réalisé au moyen d'une plaque de pose (3) coulissante.

6. Procédé selon la revendication 5, dans lequel
la plaque de pose (3) coulissante est déplacée au moyen d'un entraînement automatique (4).

7. Procédé selon la revendication 6, dans lequel
l'entraînement automatique (4) est réalisé au moyen d'une broche d'entraînement (5a), d'un entraînement à roue dentée (5b) et/ou d'une courroie dentée (5c).

8. Système présentant un distributeur de boissons, notamment un distributeur de café automatique (10), et un logiciel, notamment une application, qui est configuré(e) de manière à ce que le procédé selon l'une quelconque des revendications précédentes soit réalisable lorsque le logiciel, notamment l'application, est installé(e) sur un terminal mobile.

9. Système selon la revendication 8 avec renvoi aux revendications 5, 6 ou 7, dans lequel
la plaque de pose (3) peut être retirée du distributeur de boissons, et/ou l'entraînement automatique (4) est disposé de manière fixe sur le distributeur de boissons, resp. est fixé sur le distributeur de boissons.

10. Système selon la revendication 8 ou 9 avec renvoi aux revendications 5, 6 ou 7, dans lequel
le distributeur de boissons présente une zone de stockage (8) pour des récipients (2) à remplir, lesquels peuvent être retirés automatiquement de la plaque de pose (3), notamment les uns après les autres.
